# EUROPEAN PATENT SPECIFICATION

(11) **EP 3 307 977 B1**
(45) Date of publication and mention of the grant of the patent: **08.12.2021**
(21) Application number: 16806442.6
(22) Date of filing: 10.06.2016
(51) Int. Cl.: E06B 3/677, E06B 3/66, C03B 23/20, C03C 27/00, C03C 27/06, C03C 27/04

(54) **PUMP OUT TUBE PREFORM**
ABPUMPROHRVORFORM
PRÉFORME DE TUBE DE MISE SOUS VIDE

(30) Priority: 11.06.2015 AU 2015902353
(43) Date of publication of application: 18.04.2018
(73) Proprietor: The University Of Sydney, Sydney, New South Wales 2006 (AU)
(72) Inventor: KOCER, Cenk, Sydney, New South Wales 2006 (AU); VU, Tom, Sydney, New South Wales 2006 (AU); TRAN, Clara Thao Hoang, Sydney, New South Wales 2006 (AU)
(74) Representative: Plougmann Vingtoft a/s
(86) International application number: PCT/AU2016/050471
(87) International publication number: WO 2016/197199

(56) References cited:
- WO-A1-00/41980
- WO-A1-95/01493
- WO-A1-97/48650
- WO-A1-2015/119914
- US-A- 5 902 652
- US-A1- 2012 128 904
- US-A1- 2013 305 785
- US-A1- 2013 305 785
- US-B1- 6 383 580

## Description

### Field of the invention

This invention relates to a device for connecting and sealing a hole in a glass sheet. The invention is particularly useful for sealing holes in planar sheets of glass.

### Background of the invention

There are a number of situations where the space between planar sheets of glass needs to be filled or evacuated. One of these situations is vacuum insulating glazing (VIG) which is a highly thermally insulating transparent flat panel, window or device. VIG is constructed by pairing two flat glass panes which enclose an evacuated or low pressure space therebetween with an array of spacers between the panes. Glass sheets are interconnected by peripheral or edge seal of fused solder glass and array of support spacers space the glass sheets from one another allowing low pressure space to be defined between the sheets. The spacers are disk shaped and about 0.2 mm in height and 0.5 mm in diameter.

During a known vacuum IG manufacturing process, the glass sheets are paired and after pairing, a glass frit paste called solder glass is applied over the perimeter of the panes. The entire assembly including the 2 sheets and solder glass seal edge material is then heated to a temperature of approximately 450° C. at which the solder glass melts, wets the surfaces of the glass sheets, and seals the space between the sheets forming a hermetic peripheral edge seal. Before pairing, a small hole is drilled in one pane, to allow a pump out tube to be inserted with a glass frit disc preform placed over the tube.

The preform melts at the same temperature as the edge seal and seals the tube to the surface of the glass pane by solder glass to an inner major surface of one of the sheets. A vacuum is attached to the pump out tube so that the interior cavity between the glass panes is evacuated through this pump-out tube after the edge seal is formed creating a space of lower than atmospheric pressure between the glass panes. Once the gap is evacuated the tube is sealed by heating and melting the end of the tube using a small heating element. The hole is roughly the same diameter as the outside diameter as the tube. To prevent the tube falling through the hole, the hole or tube needs to be shaped to retain the tube in the hole when the disc preform is too soft to support the tube.

As the tube must be small enough for a heating element to melt the end of the tube to produce a seal, there is a limit to the size of the tube which can be used. If a larger hole is required, then retaining the tube in the hole during seal formation is US 2013/305785 discloses a method for making a vacuum insulated glass window assembly according to the preamble of claim 9 and a pump-out tube according to the preamble of claim 1.

Reference to any prior art in the specification is not an acknowledgment or suggestion that this prior art forms part of the common general knowledge in any jurisdiction or that this prior art could reasonably be expected to be understood, regarded as relevant, and/or combined with other pieces of prior art by a skilled person in the art.

### Summary of the invention

As used herein, except where the context requires otherwise, the term "comprise" and variations of the term, such as "comprising", "comprises" and "comprised", are not intended to exclude further additives, components, integers or steps.

According to one aspect of the invention, there is provided a pump-out tube for evacuating a space between two sheets of glass, the pump out tube being receivable in a hole formed in at least one of the sheets of glass, the pump out tube formed as a separate element comprising a tubular member and a seal formed around the tube

The seal may be formed around the tube by one step selected from the group of i) heat sealing a heat treated preform to the tubular member, ii) dry pressing preform material in a mould to the tubular member and iii) forming preform material and a binder into a paste, pressing the mixture into a mould and curing the preform mixture to the tubular member. The preform is preferably sized to extend beyond the edges of the hole to enable the preform to support the tube in the hole.

The space may be formed between two sheets of glass and the diameter of the tubular member is less than the thickness of the planar material which it is to be used. In a preferred form of the invention the tubular member is a glass tube and the preform is preferably formed of solder glass or glass frit.

The preform may be formed with a stepped region which can be used to locate the pump out tube in the hole in the glass pane. The stepped region accordingly has a diameter which is the same as the diameter of the hole. Alternatively the preform may be conical shaped diverging towards the hole into which it is to be fitted.

The pump out tube is formed as a separate device before use. The preform may be formed in a mould around the tubular member. The preform may be a solder glass paste formed into a shape around the tubular member and then cured, possibly by heating to seal the preform to the tubular member. Alternatively the preform is formed by mechanically dry pressing solder glass powder in a mould to the tubular member. The pump out tube is then positioned and heat sealed into position.

In another aspect of the invention, there is provided a method of producing a pump-out tube suitable for use with sheets of glass comprising the steps of fixing a preform to a tubular member by the step of heat sealing a heat treated preform to the tubular member, dry pressing preform material in a mould to the tubular member or forming preform material and a binder into a mixture and curing the preform mixture to the tubular member.

The step of heat sealing includes heating the preform to a temperature to at least partially melt the preform to secure the preform to the tubular member.

The tubular member preferably has a diameter less than the thickness of the glass which it is to be used and the tubular member is preferably a glass tube. The preform may be a preform of solder glass.

The preform may be one of a number of shapes such as square, circle or any other geometry having a recess formed therein conforming to the outer diameter of the tubular member. The preform is preferably annular shaped with the diameter of a recess in the preform conforming to the outer diameter of the tubular member. Preferably the heated preform wets the surface of the tubular member to seal the preform to the tube when the heating is removed and/or the preform and tubular member cooled.

In a further aspect, there is provided a method of installing a pump out tube in a hole in a glass sheet comprising the steps of
a. initially fixing a preform to a tubular member by one of the steps selected from the group of 1) heat sealing a heat treated preform to the tubular member; 2) dry pressing preform material in a mould to the tubular member; and 3) forming preform material and a binder into a paste and curing the preform mixture to the tubular member to form a single device;
b. fitting the device to the hole; and
c. heating the glass sheet and device to a temperature to at least soften the preform to seal the device to the glass sheet.

In a further aspect of the invention there is provided a method of forming a VIG unit comprising the steps of
a) initially applying by forming or fitting, a preform to the end of a tubular member to form an integral device by a step selected from the group of
   i. applying a preform of solder glass to an end of a tubular member, and then heating the preform to a temperature to at least partially melt the preform to secure the preform to the tubular member and cooling the preform and tubular member;
   ii. placing a glass tube in a mould and then applying into the mould an amount of solder glass dry powder, where the tube and powder are then pressed under pressure to form the desired shape and to secure the tube to the solder glass powder; and
   iii. placing a glass tube in a mould and then applying into the mould an amount of wet solder glass paste, where the tube and paste are then dried in air or in an oven, to solidify the solder glass to form the desired shape and to secure the tube to the solder glass powder;
b) fitting the device to the hole of first glass substrate, the first glass substrate being spaced from a second glass substrate by spacers and hermetically sealed to a second glass substrate; and
c) heating the glass substrates and device to a temperature to at least soften the preform to seal the glass tube of the device to the underlying glass substrate.

In a further aspect of the invention there is provided a VIG unit comprising a first glass substrate spaced from a second glass substrate by a plurality of spacers and having a hermetic peripheral edge seal, the first glass substrate having a hole including a pump-out tube as described above.

Further aspects of the present invention and further embodiments of the aspects described in the preceding paragraphs will become apparent from the following description, given by way of example and with reference to the accompanying drawings.

### Brief description of the drawings

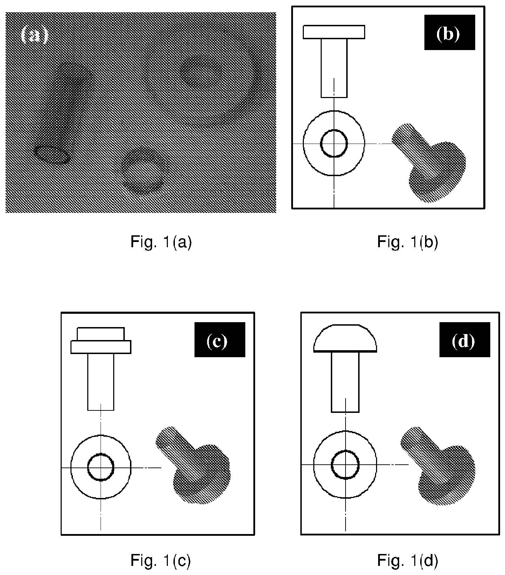

Figure 1(a) is a photograph of the prior art approach to a pump out tube and solder glass preform, where the two components are used as individual components to be combined at the hole in the glass. Figures 1(b), (c) and (d) are illustrations of potential variations of the proposed invention where the component is a combined glass tube and solder glass preform;

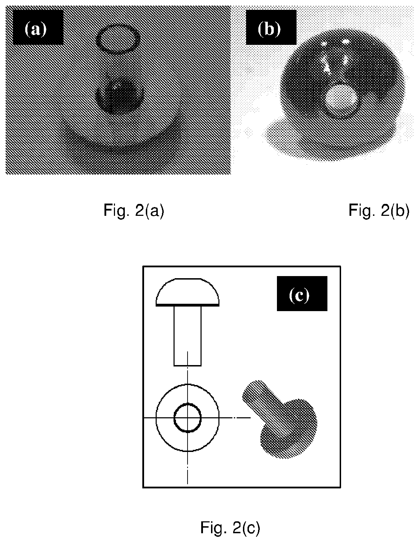

Figures 2(a), (b) and (c) illustrate the formation of the pump out tube according to the invention, where the glass tube and solder glass preform were bonded by partially heating the preform to melt it and seal it to the glass tube; 2(b) shows the rear view of the combined tube and preform shown in figure 2(a); figure 2(c) is an illustration of the geometry of this form of the component as in figure 2(a).

### Detailed description of the embodiments

While the following description of the invention will be described in some places with reference to a VIG unit, it would be understood by those skilled in the art that the invention can be used in other similar circumstances where a tube needs to be hermetically sealed to a glass pane, such as display panels.

### Heat sealing method

According to the preferred embodiment, a pump-out tube for evacuating a space between planar sheets, preferably glass panes comprising a tubular member and a seal formed around the tubular member, the seal comprising a heat treated preform heat sealed, or dry pressed, or cured from paste, to the tubular member. The preform may be one of a number of geometric shapes but in the preferred embodiment is annular shaped with the inner diameter of the preform conforming to the outer diameter of the tubular member. The planar sheets are preferably paired glass panes having a hole with a diameter at least the same size as the thickness of the glass pane formed therein. The hole and annular seal is sized to receive the annular seal at least partially within the hole. The diameter of the tubular member is less than the thickness of the sheets or panes of glass and less than the diameter of the hole. The preform may be provided with a stepped region where the diameter of the stepped region corresponds to the diameter of the hole. To make the preform more universally usable, multiple stepped regions may be provided see figure 1 (c). Alternatively the preform may be conical shaped, see figure 1(d).

Solder glass or glass solder is a low melting point glass in which usually silica glass powder is mixed with materials such as organic binders, inorganic fillers and solvents are added to alter the thermal properties of the silica for binding, coating and sealing applications. There a number of commercially available solder glass materials. The solder glass may be vitreous or non-vitreous depending on whether the mixture forms a crystalline or non-crystalline structure when sintered to form a seal. The solder glass may be of a composition that is sintered with oxides, the dominant categories of which are the lead, bismuth, vanadium, tin, silver, and gold oxides. These oxides are sintered with various other oxides such as aluminium, zinc, calcium, potassium, iron, sodium, tellurium, titanium, oxides that allow for changes in thermal and mechanical properties to suit the glass onto which it is applied.

To form the pump out tube according to a first embodiment, the preform is separately fitted to the glass tubular member and the glass tubular member and solder glass preform are held together at one end of the tube. The solder glass is then heated until melting occurs. Once the solder glass wets to the tubular member surface and seals, the heating is removed or the combined tubular member and preform cooled. Figure 2, shows a 2 mm glass pump-out tube fused at one end to a larger diameter (5mm) preform of solder glass.

The solder glass preform can be produced at different thicknesses and diameters or formed in-situ around the tubular member. Upon heating, the solder glass partially melts to secure the preform to the tubular member and the natural flow of the solder glass produces a cone shape at the end of the tube. This simplifies locating the preform on the hole on the glass pane. Thus by separately producing the pump out tube prior to fitting to the hole in the sheet material, the invention utilises the existing components to effectively and simply solve the problem of sealing large diameter holes with a small diameter tube. There is no need for special geometries or new components. It is also possible that this product could be used in other technologies, such as flat panel displays.

The heating of the solder glass must be controlled within limits depending on the thermal properties of the solder glass. The preferred solder glass used in embodiments of the invention melts between 320-480ºC. If the heating is too quick then undesirable bubbles may form in the structure leading to premature cracking of the preform and/or the solder glass will deform significantly; once the optimum temperature and time of exposure has been determined the preform can be produced with great accuracy and reproducibility. Considering other industrial technologies, this pump out tube according to the invention could be produced with great speed and at low cost.

### Dry pressing method

The production process used in further embodiments of the invention may incorporate a process of dry pressing solder glass powder with a tubular member in a mould; or alternatively a wet paste of the solder glass with the tubular member could be cured in a mould, to produce a preform of solder glass attached to a glass tubular member. By use of the mould the solder glass geometry could be of any shape, such as annulus disk, annulus disk with an edge step, conical, square, etc.

### Wet pressing method

### Production using pressing wet paste of glass solder and curing

A glass tube of diameter 2 mm is placed in a mould that has a predefined geometry. The solder paste is prepared by mixing solder glass with a binder material, e.g. ethyl cellulose, which was first dissolved in an appropriate solvent. This mixture is formed at a viscosity less than 200 Pa sec, and then injected into the mould to fill the volume surrounding the glass tube. The combined preform and tube are then cured, at room temperature or in an oven for a specific time. Once cured the glass tube will adhere to the solder glass paste and both are removed as a single complete component.
Production of vacuum induced glass panel.

In order to produce a vacuum insulating glass unit, a 4mm hole is formed in the corner of a first glass substrate and the first and second glass substrate are positioned so that the planes of the glass are substantially parallel. An array of spacers/pillars are positioned between the substrates for spacing the substrates from one another and supporting them. Edge sealing material which is generally a solder glass is positioned around the peripheral edge of the substrates.

The edge seal may be made of or include any of the following materials: solder glass (i.e. glass frit; an oxide inclusive mixture having a melting point lower than that of normal glass), ceramic, Indalloy No. 53 available from Indium Corp. in paste or wire form having a composition of 67% Bi and 33% In (% by weight), Indalloy No. 1 from Indium Corp. in paste or wire form having a composition of 50% In and 50% Sn, Indalloy No. 290 available from Indium Corp. in paste or wire form having a composition of 97% In and 3% Ag, Indalloy No. 9 from Indium Corp. in paste or wire form having a composition of 70% Sn, 18% Pb and 12% In, Indalloy No. 281 available from Indium Corp. in paste or wire form having a composition of 58% Bi and 42% Sn, Indalloy No. 206 available from Indium Corp. in paste or wire form having a composition of 60% Pb and 40% In, Indalloy No. 227 available from Indium Corp. in paste or wire form having a composition of 77.2% Sn, 20% In and 2.8% Ag, Indalloy No. 2 available from Indium Corp. in paste or wire form having a composition of 80% In, 15% Pb and 5% Ag, Indalloy No. 3 available from Indium Corp. in paste or wire form having a composition of 90% In and 10% Ag, or any other suitable hermetically sealing material.

The substrates are then heated to a temperature to soften and form a hermetic seal around the periphery of the space between the substrates.

The pump-out tube according to the invention is fitted into the 4 mm diameter hole formed in a glass substrate. The glass substrate is heated to a temperature of 380ºC ― 420ºC for 15 to 30 minutes to enable the solder glass to soften and wet the interior of the hole in the glass and seal the pump-out tube into the glass pane. It is important not to heat the substrates for too long so as not to break down the structural integrity of the solder glass. If the pump out tube and glass panes are heated for too long or the temperature too high, the viscosity of the solder glass will deteriorate and the shape of the preform will soften to a level where it will not retain the tubular member in the hole. After placement on a flat sheet and upon heating, the solder glass would melt and seal to the tubular member and also seal to the flat sheet, which would be glass in most cases.

After the pump out tube has been positioned and heated, the tube of the component should not have moved from its original position, with respect to its height and vertical alignment, by an amount greater than 0.2 mm. Changes in the original position, with respect to height and vertical alignment, which are greater than 0.2 mm, will render the tube of-no-use in the desired application.

In order to evacuate the space between the glass substrates, the pump out tube is connected to a vacuum source and the gas in the space between the substrates reduced to a pressure equal to or below 0.01 hPa.The pump out tube is then sealed and the excess material above the glass substrate removed. The edge structure together with the pump-out tube eliminates the egress or outgress of gas to/from the space between the glass substrates.

It will be understood that the invention disclosed and defined in this specification extends to all alternative combinations of two or more of the individual features mentioned or evident from the text or drawings. All of these different combinations constitute various alternative aspects of the invention.

## Claims

1. A pump-out tube for evacuating a space between two spaced apart sheets of glass of a glass panel, the two spaced apart sheets of glass enclosing a space and a hole formed in at least one of the sheets of glass, wherein the pump-out tube is receivable in the hole formed in said at least one of the sheets of glass to evacuate the space between said two sheets of glass, **characterised in that** the pump-out tube is formed as a separate element prior to fitting the pump-out tube to the hole, and comprises a tubular member and a seal formed around the tubular member, and **in that** the seal is sized to extend beyond edges of the hole to enable the seal to support the tubular member in the hole, said seal being at least partially received within the hole.

2. The pump-out tube of claim 1 wherein the seal is formed around the tubular member by one step selected from the group of i) heat sealing a heat treated preform to the tubular member, ii) dry pressing preform material in a mould to the tubular member and iii) forming preform material and a binder into a paste, pressing the mixture into a mould and curing the preform mixture to the tubular member.

3. The pump-out tube of claim 1 or 2 wherein a diameter of the tubular member is less than a thickness of the sheets of glass.

4. The pump-out tube of claim 3 wherein the tubular member is a glass tube and the preform is formed of solder glass.

5. The pump-out tube of any one of claims 2 to 4, wherein the preform is formed with a stepped region which can be used to locate the pump-out tube in the hole formed in said at least one of the sheets of glass.

6. The pump-out tube of claim 5 wherein the stepped region has a diameter which is the same as the diameter of the hole.

7. The pump-out tube of any one of claims 2 to 4, wherein the preform is conical shaped diverging towards the hole formed in at least one of the sheets of glass into which it is to be fitted.

8. The pump-out tube of any one of claims 2 to 7, wherein the preform is annular shaped with the inner diameter of the preform conforming to the outer diameter of the tubular member.

9. A method of producing a pump-out tube suitable for use with a glass panel comprising two spaced apart sheets of glass enclosing a space and a hole formed in at least one of the sheets of glass, wherein the method comprises the steps of applying, by forming or fitting, a preform to an end of a tubular member, heating the preform to a temperature to at least partially melt the preform to secure the preform to the tubular member to form said pump-out tube, **characterised in that** the pump-out tube is produced as a separate element prior to fitting the pump-out tube to the hole formed in said at least one of the sheets of glass, and **in that** the preform is sized to extend beyond edges of the hole to enable the preform to support the tubular member in the hole, said preform being at least partially received within the hole.

10. The method of claim 9 wherein the tubular member has a diameter less than a thickness of the sheets of glass and the tubular member is a glass tube.

11. The method of claim 9 or 10 wherein the preform is a preform of solder glass.

12. The method of any one of claims 9 to 11 wherein the preform is annular shaped with an inner diameter of the preform conforming to an outer diameter of the tubular member, the heated preform wets the surface of the tubular member to seal the preform to the tubular member when the heating is removed and/or the preform and tubular member cooled.

13. The method of any one of claims 9 to 12 wherein the preform is a shape selected from the group of a square, circle or any other geometric having a recess formed therein conforming to the outer diameter of the tubular member.

14. The method of any one of claims 9 to 12 wherein the preform is annular shaped with the diameter of a recess in the preform conforming to the outer diameter of the tubular member.

15. The method of any one of claims 9 to 14 wherein the heated preform wets the surface of the tubular member to seal the preform to the tubular member when the heating is removed and/or the preform and tubular member are cooled.

## Patentansprüche

1. Abpumprohr zum Evakuieren eines Raums zwischen zwei voneinander beabstandeten Glasplatten einer Glasscheibe, wobei die zwei voneinander beabstandeten Glasplatten einen Raum und ein in zumindest eine der Glasplatten geformtes Loch einschließen, wobei das Abpumprohr in dem in zumindest einer der Glasplatten ausgebildeten Loch aufnehmbar ist, um den Raum zwischen den zwei Glasplatten zu evakuieren, **dadurch gekennzeichnet, dass** das Abpumprohr als separates Element ausgebildet ist, bevor das Abpumprohr in das Loch gepasst wird, und ein rohrförmiges Element und eine um das rohrförmige Element gebildete Dichtung umfasst, und dadurch, dass die Dichtung so bemessen ist, dass sie über die Kanten des Loches hervorsteht, um zu ermöglichen, dass die Dichtung das rohrförmige Element in dem Loch stützt, wobei die Dichtung zumindest teilweise in dem Loch aufgenommen ist.

2. Abpumprohr nach Anspruch 1, wobei die Dichtung um das rohrförmige Element herum gebildet wird durch einen Schritt ausgewählt aus der Gruppe von i) Heißsiegeln eines wärmebehandelten Vorformlings an das rohrförmige Element, ii) Trockenpressen von Vorformlingsmaterial in einer Form an das rohrförmige Element und iii) Formen des Vorformlingsmaterials und eines Bindemittels zu einer Paste, Pressen der Mischung in eine Form und Härten der Vorformlingsmischung an dem rohrförmigen Element.

3. Abpumprohr nach Anspruch 1 oder 2, wobei ein Durchmesser des rohrförmigen Elements geringer ist als eine Dicke der Glassplatten.

4. Abpumprohr nach Anspruch 3, wobei das rohrförmige Element ein Glasrohr ist und der Vorformling aus Glaslot gebildet ist.

5. Abpumprohr nach einem der vorstehenden Ansprüche 2 bis 4, wobei der Vorformling mit einem abgestuften Bereich ausgebildet ist, der verwendet werden kann, um das Abpumprohr in dem in zumindest einer der Glasplatten gebildetem Loch anzuordnen.

6. Abpumprohr nach Anspruch 5, wobei der abgestufte Bereich einen Durchmesser hat, der gleich dem Durchmesser des Lochs ist.

7. Abpumprohr nach einem der Ansprüche 2 bis 4, wobei der Vorformling konisch geformt ist und in Richtung des Lochs, in das er eingepasst werden soll, divergiert.

8. Abpumprohr nach einem der Ansprüche 2 bis 7, wobei der Vorformling ringförmig ist, wobei der Innendurchmesser des Vorformlings dem Außendurchmesser des rohrförmigen Elements entspricht.

9. Verfahren zum Herstellen eines Abpumprohrs, das zur Verwendung mit Glasscheiben geeignet ist, umfassend zwei voneinander beabstandete Glasplatten, die einen Raum und ein in zumindest eine der Glasplatten gebildetes Loch einschließen, wobei das Verfahren die Schritte des Aufbringens eines Vorformlings durch Formen oder Einpassen auf ein Ende eines rohrförmigen Elements, des Erhitzens des Vorformlings auf eine Temperatur umfasst, um den Vorformling zumindest teilweise zu schmelzen, um den Vorformling an dem rohrförmigen Element zu befestigen, um den Abpumpschlauch zu bilden, **dadurch gekennzeichnet, dass** das Abpumprohr als separates Element ausgebildet ist, bevor das Abpumprohr in das Loch gepasst wird, und dadurch, dass der Vorformling so bemessen ist, dass er über die Kanten des Loches hervorsteht, um zu ermöglichen, dass der Vorformling das rohrförmige Element in dem Loch stützt, wobei der Vorformling zumindest teilweise in dem Loch aufgenommen ist.

10. Verfahren nach Anspruch 9, wobei das rohrförmige Element einen Durchmesser von weniger als einer Dicke der Glasplatte hat und das rohrförmige Element ein Glasrohr ist.

11. Verfahren nach Anspruch 9 oder 10, wobei der Vorformling ein Vorformling aus Glaslot ist.

12. Verfahren nach einem der Ansprüche 9 bis 11, wobei der Vorformling ringförmig mit einem Innendurchmesser des Vorformlings ist, der dem Außendurchmesser des rohrförmigen Elements entspricht, wobei der erhitzte Vorformling die Oberfläche des rohrförmigen Elements benetzt, um den Vorformling an dem rohrförmigen Element zu dichten, wenn die Heizung entfernt wird und/oder der Vorformling und das rohrförmige Element abgekühlt werden.

13. Verfahren nach einem der Ansprüche 9 bis 12, wobei der Vorformling eine aus der Gruppe eines Quadrats, eines Kreises oder einer anderen Geometrie ausgewählte Form mit einer darin gebildeten Vertiefung ist, die dem Außendurchmesser des rohrförmigen Elements entspricht.

14. Verfahren nach einem der Ansprüche 9 bis 12, wobei der Vorformling ringförmig ist, wobei der Durchmesser einer Vertiefung in dem Vorformling dem Außendurchmesser des rohrförmigen Elements entspricht.

15. Verfahren nach einem der Ansprüche 9 bis 14, wobei der erhitzte Vorformling die Oberfläche des rohrförmigen Elements benetzt, um den Vorformling mit dem rohrförmigen Element zu dichten, wenn die Heizung entfernt wird und/oder der Vorformling und das rohrförmige Element abgekühlt werden.

## Revendications

1. Tube de mise sous vide destiné à faire le vide dans un espace entre deux feuilles de verre séparées par un espace d'un panneau de verre, les deux feuilles de verre séparées par un espace entourant un espace et un trou formé dans au moins l'une des feuilles de verre, dans lequel le tube de mise sous vide peut être inséré dans le trou formé dans ladite au moins une des feuilles de verre afin de faire le vide dans l'espace entre lesdites deux feuilles de verre, **caractérisé en ce que** le tube de mise sous vide est formé en tant qu'un élément séparé avant l'adaptation du tube de mise sous vide au trou, et comprend un élément tubulaire et un joint d'étanchéité formé autour de l'élément tubulaire, et **en ce que** le joint d'étanchéité est dimensionné de manière à s'étendre au-delà des bords du trou afin de permettre au joint d'étanchéité de soutenir le membre tubulaire dans le trou, ledit joint d'étanchéité étant au moins en partie inséré dans le trou.

2. Tube de mise sous vide selon la revendication 1, dans lequel le joint d'étanchéité est formé autour de l'élément tubulaire par une étape choisie dans le groupe constitué par i) thermoscellage d'une préforme traitée par la chaleur au membre tubulaire, ii) pressage à sec de matériau de préforme dans un moule sur le membre tubulaire et iii) mise sous forme d'une pâte de matériau de préforme et d'un liant, pressage du mélange dans un moule et durcissement du mélange de préforme sur le membre tubulaire.

3. Tube de mise sous vide selon la revendication 1 ou 2, dans lequel un diamètre du membre tubulaire est inférieur à une épaisseur des feuilles de verre.

4. Tube de mise sous vide selon la revendication 3, dans lequel le membre tubulaire est un tube en verre et la préforme est constituée de verre de scellement.

5. Tube de mise sous vide selon l'une quelconque des revendications 2 à 4, dans lequel la préforme est mise en forme avec une zone en gradin qui peut être utilisée pour placer le tube de mise sous vide dans le trou formé dans ladite au moins une des feuilles de verre.

6. Tube de mise sous vide selon la revendication 5, dans lequel la zone en gradin a un diamètre qui est le même que le diamètre du trou.

7. Tube de mise sous vide selon l'une quelconque des revendications 2 à 4, dans lequel la préforme a une forme conique divergeant vers le trou formé dans au moins l'une des feuilles de verre, dans laquelle elle est destinée à être adaptée.

8. Tube de mise sous vide selon l'une quelconque des revendications 2 à 7, dans lequel la préforme a une forme annulaire, le diamètre interne de la préforme correspondant au diamètre externe du membre tubulaire.

9. Procédé de production d'un tube de mise sous vide approprié à être utilisé avec un panneau de verre comprenant deux feuilles de verre séparées par un espace, entourant un espace et un trou formé dans au moins l'une des feuilles de verre, dans lequel le procédé comprend les étapes consistant à appliquer, par formage ou adaptation, une préforme sur une extrémité d'un membre tubulaire, chauffer la préforme jusqu'à une température pour fondre au moins en partie la préforme afin de fixer la préforme au membre tubulaire pour former ledit tube de mise sous vide, **caractérisé en ce que** le tube de mise sous vide est produit en tant qu'un élément séparé avant l'adaptation du tube de mise sous vide au trou formé dans ladite au moins une des feuilles de verre, et **en ce que** la préforme est dimensionnée de manière à s'étendre au-delà des bords du trou afin de permettre à la préforme de soutenir le membre tubulaire dans le trou, ladite préforme étant au moins en partie insérée dans le trou.

10. Procédé selon la revendication 9, dans lequel le membre tubulaire a un diamètre inférieur à une épaisseur des feuilles de verre et le membre tubulaire est un tube en verre.

11. Procédé selon la revendication 9 ou 10, dans lequel la préforme est une préforme en verre de scellement.

12. Procédé selon l'une quelconque des revendications 9 à 11, dans lequel la préforme a une forme annulaire, un diamètre interne de la préforme correspondant à un diamètre externe du membre tubulaire, la préforme chauffée mouille la surface de l'élément tubulaire pour sceller la préforme à l'élément tubulaire lorsque le chauffage est retiré et/ou la préforme et l'élément tubulaire sont refroidis.

13. Procédé selon l'une quelconque des revendications 9 à 12, dans lequel la préforme a une forme choisie dans le groupe constitué par un carré, un cercle ou toute autre forme géométrique comportant un retrait formé dans celle-ci, correspondant au diamètre externe de l'élément tubulaire.

14. Procédé selon l'une quelconque des revendications 9 à 12, dans lequel la préforme a une forme annulaire, le diamètre d'un retrait dans la préforme correspondant au diamètre externe du membre tubulaire.

15. Procédé selon l'une quelconque des revendications 9 à 14, dans lequel la préforme chauffée mouille la surface de l'élément tubulaire pour sceller la préforme à l'élément tubulaire lorsque le chauffage est retiré et/ou la préforme et l'élément tubulaire sont refroidis.
